# EUROPÄISCHE PATENTSCHRIFT

(11) **EP 1 805 885 B1**
(45) Veröffentlichungstag und Bekanntmachung des Hinweises auf die Patenterteilung: **17.06.2009**
(21) Anmeldenummer: 05793502.5
(22) Anmeldetag: 20.09.2005
(51) Int. Cl.: H02P 3/04, B60T 13/74

(54) **ELEKTROMAGNETISCH BETÄTIGBARE BREMSE, VORRICHTUNG ZUR SICHEREN ANSTEUERUNG EINER ELEKTROMAGNETISCH BETÄTIGBAREN BREMSE, ELEKTROMOTOR UND BREMSE**
ELECTROMAGNETIC BRAKE, DEVICE FOR THE RELIABLE CONTROL OF AN ELECTROMAGNETIC BRAKE, ELECTRIC MOTOR AND BRAKE
FREIN ELECTROMAGNETIQUE, DISPOSITIF DE COMMANDE SURE D'UN FREIN ELECTROMAGNETIQUE, MOTEUR ELECTRIQUE ET FREIN

(30) Priorität: 22.10.2004 DE 102004051780; 15.06.2005 DE 102005027502
(43) Veröffentlichungstag der Anmeldung: 11.07.2007
(73) Patentinhaber: SEW-EURODRIVE GmbH & Co. KG, 76646 Bruchsal (DE)
(72) Erfinder: BECKER, Günter, 76684 Östringen (DE); PODBIELSKI, Leobald, 76199 Karlsruhe (DE); SCHMIDT, Josef, 76676 Graben-Neudorf (DE)
(86) Internationale Anmeldenummer: PCT/EP2005/010098
(87) Internationale Veröffentlichungsnummer: WO 2006/045379

(56) Entgegenhaltungen:
- EP-A- 0 242 671
- EP-A- 0 575 023
- DE-A1- 19 714 538
- JP-A- 2002 284 463
- US-A- 3 899 061
- US-A- 5 577 578
- PATENT ABSTRACTS OF JAPAN Bd. 2003, Nr. 02, 5. Februar 2003 (2003-02-05) & JP 2002 284463 A (TOSHIBA ELEVATOR CO LTD), 3. Oktober 2002 (2002-10-03)

## Beschreibung

Die Erfindung betrifft eine elektromagnetisch betätigbare Bremse, eine Vorrichtung zur sicheren Ansteuerung einer elektromagnetisch betätigbaren Bremse, einen Elektromotor und Bremse.

Aus der DE 102 61 454 A1 und der DE 102 61 450 A1 sind sichere Motorsteuerungen bekannt, die zweikanalige Abschaltmöglichkeiten umfassen. Bei Ausfall eines Abschaltkanals ist noch ein zweiter verfügbar und somit ein sicheres Abschalten ermöglicht.

Aus der DE 197 40 016 C2 ist ein Weitspannungsbremsgleichrichter bekannt, der an verschieden großen Netzspannungen betreibbar ist, aber keine Sicherheit aufweist.

Der Erfindung liegt daher die Aufgabe zugrunde, eine Vorrichtung weiterzubilden, wobei die Bremse sicher angesteuert werden kann.

Erfindungsgemäß wird die Aufgabe bei der Bremse nach den in Anspruch 1, bei der Vorrichtung nach den in Anspruch 5 oder 6 bei dem Elektromotor nach den in Anspruch 26 und bei dem Antrieb nach den in Anspruch 28 oder 29 angegebenen Merkmalen gelöst. Wichtige Merkmale der Erfindung bei der Bremse sind, dass sie elektromagnetisch betätigbar ist, wobei der Energiefluss der Bremse von einem Schalter derart gesteuert wird, dass bei Fehler oder Ausfall des Schalters die Bremse einfällt. Von Vorteil ist dabei, dass die Sicherheit erhöht ist. Denn wenn im Ansteuerkanal irgendein Bauteil ausfällt, insbesondere der Schalter, fällt die Bremse auf jeden Fall ein. Somit führt irgendein Defekt zum Einfallen der Bremse. Eine zugehörige Anlage oder Maschine wird also in den sicheren Ruhezustand versetzt.

Bei einer vorteilhaften Ausgestaltung ist der Fehler oder Ausfall ein dauerhaft wirksamer Kurzschluss, ein Auftrennen oder ein Hochohmigwerden des Schalters. Von Vorteil ist dabei, dass ein Halbleiterbauteil als Schalter einsetzbar ist. Denn bei den bekannten Versagensarten von Halbleitern wirkt die Erfindung und führt zum sicheren Zustandes der Bremse und der Maschine oder Anlage.

Bei einer Ausgestaltung ist die Steuerspannung für den Schalter von einem ersten Schaltungsblock B1 erzeugt, der aus einer Steuerspannung Us versorgt ist, insbesondere galvanisch getrennt. Von Vorteil ist dabei, dass die galvanische Trennung die Sicherheit erhöht und keine zusätzliche Versorgungsspannung notwendig ist.

Bei einer vorteilhaften Ausgestaltung fällt bei Ausfall der Steuerspannung Us die Bremse ein. Von Vorteil ist dabei, dass die Sicherheit derart erhöht ist, dass bei Ausfall der Steuerspannung in jedem Fall der sichere Zustand erreicht wird.

Wichtige Merkmale der Erfindung bei der Vorrichtung sind, dass die Vorrichtung zur sicheren Ansteuerung einer elektromagnetisch betätigbaren Bremse vorgesehen ist, umfassend eine Bremsspule, die bei ihrer Bestromung der Federkraft von Federelementen gegenwirkend ein Lüften der Bremse bewirkbar macht,
wobei ein Transformator vorgesehen ist, dessen Primärwicklung mit einem ersten Schalter in Reihe geschaltet ist, der zur Regelung des Stromes in der Primärwicklung getaktet betreibbar ist,
wobei der Schalter von einem ersten Schaltungsblock steuerbar ist, der aus einer Steuerspannung versorgt ist und mit Mitteln zur Stromerfassung des Stromes auf der Primärseite, also in der Primärwicklung, verbunden ist,
wobei die Bremsspule aus der Sekundärspule des Transformators versorgt ist, insbesondere über eine Diode,
wobei die Steuerspannung für den Schalter von einem ersten Schaltungsblock B1 erzeugt ist, der aus einer Steuerspannung Us versorgt ist,
wobei der erste Schaltungsblock derart ausgeführt ist, dass zu Beginn der Bestromung der Bremsspule in einem ersten Zeitabschnitt eine höhere und danach eine niedrigere Spannung an der Bremse anliegt, insbesondere zur Erreichung eines noch schnelleren Lüftens der Bremse.

Von Vorteil ist dabei, dass bei Ausfall der Steuerspannung die Bremse einfällt. Auch bei einem Ausfall, wie beispielsweise dem Ausfall des ersten Schalters, irgendeines anderen wichtigen Bauteils fällt die Bremse ein. Somit ist ein absolut sicheres Abschalten der Bremse ermöglicht. Als Ausfall ist dabei auch ein Defekt zu verstehen, bei dem ein Schalter dauerhaft niederohmig wird. Die Schalter sind vorzugsweise als elektronische Halbleiterschalter ausgeführt. Bei der Erfindung führt ein dauerhaft niederohmiger oder geöffneter Schalter zum Einfallen der Bremse, also zu einer Bremswirkung gegen das bewegliche Teil.

Bei einer vorteilhaften Ausgestaltung ist eine Freilaufdiode für die Bremsspule und ein Varistor vorgesehen. Von Vorteil ist dabei, dass ein Schutz gegen Überspannung vorsehbar ist.

Bei einer vorteilhaften Ausgestaltung wird die Sekundärspannung einem Gleichrichter zugeführt, aus dem die Bremsspule mit Gleichstrom versorgbar ist. Von Vorteil ist dabei, dass die Spannung gleichgerichtet wird und hiermit die Versorgung der Gleichstrombremse ermöglicht ist und solche Bremsen ansteuerbar sind.

Bei einer vorteilhaften Ausgestaltung sind der sekundärseitige und der primärseitige Schaltungsteil der Vorrichtung voneinander galvanisch getrennt. Von Vorteil ist dabei, dass die Sicherheit zusätzlich erhöht ist.

Bei einer vorteilhaften Ausgestaltung ist von einem zweiten Schaltungsblock mittels eines mit diesem verbundenen zweiten Schalter der Strom der Bremsspule beeinflussbar. Von Vorteil ist dabei, dass die Bremsspule zeitlich sehr schnell aus- und/oder einschaltbar ist.

Bei einer vorteilhaften Ausgestaltung ist der zweite Schaltungsblock zur Datenübertragung mittels eines Optokopplers mit dem ersten Schaltungsblock verbunden. Von Vorteil ist dabei, dass auch bei der Datenübertragung eine galvanische Trennung vorsehbar ist.

Bei einer Ausgestaltung ist der erste Schaltungsblock und/oder der zweite Schaltungsblock derart ausgeführt, dass die Vorrichtung an einem weiten Bereich von Eingangsspannungen derart betreibbar ist, dass die an der Bremsspule anliegende Spannung im Wesentlichen unverändert ist. Es sind dann also europäische und auch US -Netzversorgungsspannungen einem Gleichrichter eines Umrichters zuführbar und aus der von diesem Gleichrichter erzeugten Zwischenkreisspannung ist dann die Versorgung des ersten Schaltungsblockes ohne weitere Geräte zur Anpassung ausführbar. Von Vorteil ist dabei, dass mittels des Blockes ein Regeln der Ausgangsspannung auf einen bestimmten Wert ermöglicht ist und dieser Wert unabhängig von der Eingangsspannung erreichbar ist - zumindest aber unabhängig für einen weiten Bereich von Eingangsspannungen, insbesondere von 350 V bis 850 V. Wenn die Eingangsspannung die Zwischenkreisspannung eines Umrichters ist, ist es dabei vorteilhaft, wenn der Bereich derart gewählt ist, dass der Umrichter einphasig oder mit Drehstrom versorgbar ist und einen entsprechenden Gleichrichter zur Erzeugung der Zwischenkreisspannung aufweist. Somit ist die Vorrichtung je nach Netz, also deutschem, europäischem, russischem, nordamerikanischem Netz und dergleichen, für eine Zwischenkreisspannung zumindest von 350 V= bis 850V= betreibbar.

Bei einer Ausgestaltung ist der erste Schaltungsblock und/oder der zweite Schaltungsblock derart ausgeführt, dass zu Beginn der Bestromung der Bremsspule ein zeitlich veränderlicher Verlauf der an der Bremse anliegende Spannung vorsehbar ist. Insbesondere ist der erste Schaltungsblock und/oder der zweite Schaltungsblock derart ausgeführt, dass zu Beginn der Bestromung der Bremsspule in einem ersten Zeitabschnitt eine höhere und danach eine niedrigere Spannung an der Bremse anliegt. Von Vorteil ist dabei, dass ein noch schnelleres Lüften der Bremse erreichbar ist.

Bei einer vorteilhaften Ausgestaltung wird der erste Schalter S1 mit einer Frequenz von mehr als 4 kHz, insbesondere vorteiligerweise mehr als 8 kHz, betrieben. Von Vorteil ist dabei, dass die Magnetostriktion verringerbar ist und somit ein geräuscharmer Betrieb der Bremse ausführbar ist. Die Schaltfrequenz kann sogar größer als 16kHz gewählt werden und somit in den nicht-hörbaren Bereich gelegt werden.

Bei einer vorteilhaften Ausgestaltung umfasst der zweite Schaltungsblock Mittel zur Erfassung seiner Ausgangsspannung. Die gemessenen Werte sind übertragbar mittels der Datenübertragung zum ersten Schaltungsblock. Dies geschieht also beispielsweise über Optokoppler oder aufmodulierte Hochfrequenzanteile per Transformator. Somit ist di Information übertragbar, dass die gewünschte Ausgangsspannung erreicht ist und somit der erste Schaltungsblock derart betreibbar ist, dass keine weitere Zunahme der sekundärseitigen Ausgangsspannung erreicht wird.

Wesentliche Merkmale bei dem Elektromotor sind, dass er eine vorgenannte elektromagnetisch betätigbaren Bremse oder eine Vorrichtung umfasst. Von Vorteil ist dabei die erhöhte Sicherheit des Elektromotors. Insbesondere ist der Schalter und/oder die Vorrichtung im Anschlusskasten des Motors vorgesehen. Somit ist eine besonders kompakte und gegen Störstrahlungen unempfindliche Art ausführbar.

Wesentliche Merkmale bei einem Antrieb, der den vorgenannten Elektromotor umfasst, sind auch dass die Steuerspannung Us für den ersten Schalturigsblock B1 von einem Umrichter des Antriebs erzeugt wird. Der Antrieb umfasst dabei zumindest eine Bremse einen Elektromotor und einen diesen versorgenden Umrichter. Wahlweise kann der Antrieb noch mit einem von dem Elektromotor angetriebenen Getriebe ausgeführt sein.
Insbesondere wird die Steuerspannung Us von einer vom Antrieb räumlich getrennt angeordneten Vorrichtung erzeugt. Somit ist sogar eine SPS oder andere Steuerung elektrisch verbindbar und die Bremse von dieser aus ansteuerbar, wenn nicht der Umrichter selbst die Steuerspannung für den Schalter zum Ansteuern der Bremse erzeugt.

Weitere Vorteile ergeben sich aus den Unteransprüchen.

### Bezugszeichenliste

- Ue+, Ue-: Eingangsspannung
- Us: Steuerspannung
- B1: erster Schaltungsblock
- T2: Stromerfassung
- S1: elektronischer Schalter
- T1: Transformator
- D1: Diode
- C1: Kondensator
- U1: Optokoppler
- U2: Optokoppler
- B2: zweiter Schaltungsblock
- R1: Varistor
- L1: Bremsspule
- D2: Freilaufdiode

### Die Erfindung wird nun anhand von Abbildungen näher erläutert:

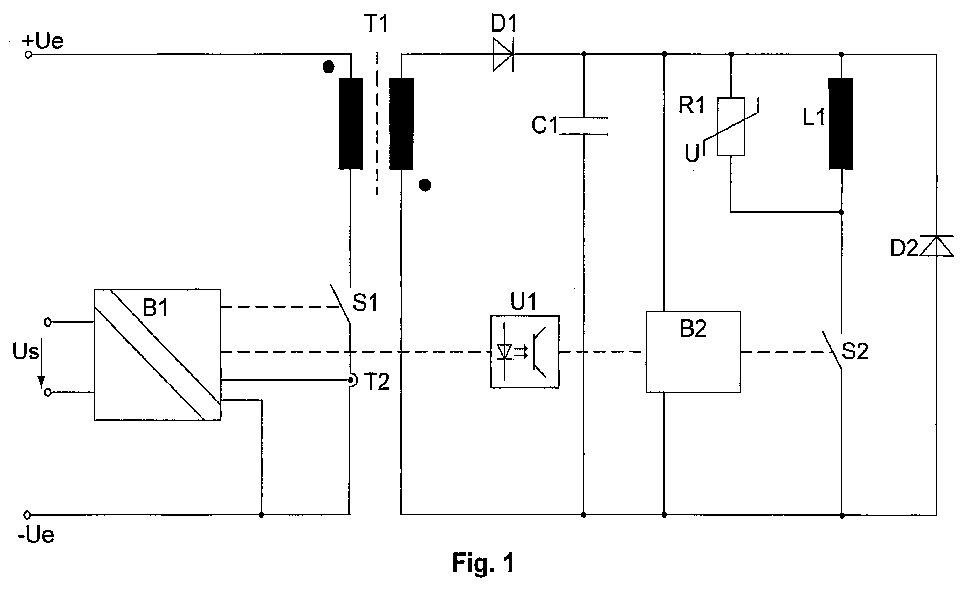

In der Figur 1 ist eine erfindungsgemäße Vorrichtung gezeichnet. Sie weist zwei galvanisch voneinander getrennt ausgeführte Teile auf.

Im ersten Teil ist der erste Schaltungsblock B1, also eine erste elektronische Schaltungsanordnung, aus der Steuerspannung Us versorgt. Der erste Schaltungsblock B1 umfasst eine elektronische Schaltung, die den elektronischen Schalter S1 pulsweitenmoduliert taktet und auf diese Weise die an der Primärwicklung anliegende zeitlich gemittelte Spannung steuert. Dabei sind zeitlich gemittelte Spannungswerte zwischen -Ue und +Ue erzielbar. Der zugehörige Strom wird erfasst mittels der Stromerfassung T2, wobei die erfassten Stromwerte dem ersten Schaltungsblock 1 zugeführt werden und abhängig von diesen Werten die Pulsweitenmodulationsdauer variiert wird.

Statt der Pulsweitenmodulation sind entsprechend wirkende andere Taktungsarten verwendbar.

Die Steuerspannung Us wird von einer extern anzuschließenden Vorrichtung geliefert.

Galvanisch getrennt wird die an der Sekundärspule des Transformators T1 anliegende Sekundärspannung mit der Diode D1 gleichgerichtet und mittels des Kondensators C1 geglättet. Aus dieser Gleichspannung wird die Bremsspule L1 versorgt, wobei der Varistor R1 als Überspannungsschutz vorgesehen ist und die Diode D2 als Freilaufdiode. Mittels des Schalters S2, der elektronisch oder mechanisch ausführbar ist, gibt der zweite Schaltungsblock B2 den Strom für die Bremsspule frei oder sperrt diesen.

Die Bremsspule gehört zu einer elektromagnetisch betätigbaren Bremse für einen Motor, insbesondere Elektromotor.

Bei Bestromung der Bremsspule wird eine Ankerscheibe angezogen entgegen der Wirkung von mechanischen Federelementen und somit ein Freiraum für Bremsbeläge derart frei gegeben, dass keine Bremswirkung erzielt wird und der Rotor des Motors sich unverhindert drehen kann.

Sobald der Strom durch die Bremsspule unter einen kritischen Wert abfällt, unterschreitet die anziehende Kraft der Bremsspule die abstoßende Kraft der mechanischen Federelementen. Somit wird ein Einfallen der Bremse bewirkt.

Der Schaltungsblock 1 ist nur aus der Steuerspannung Us selbst versorgt. Daher schaltet er mit Sicherheit den Schalter S1 ab, wenn die Steuerspannung ausfällt. Dabei ist innerhalb des ersten Schaltungsblockes B1 eine galvanische Trennung ausgeführt zwischen der Steuerspannung Us und der Zwischenkreisspannung +Ue , -Ue.

Als +Ue, -Ue Eingangsspannung ist beispielsweise eine Zwischenkreisspannung eines Umrichters vorsehbar. Solche Spannungen erreichen Werte von mehr als 500 Volt bis 1000 Volt und mehr. Da jedoch der erste Schaltungsblock B1 auf dem Potential -Ue angeordnet ist, ist es ermöglicht einen großen räumlichen Abstand vom Potential +Ue einzuhalten.

Der erste Schaltungsblock 1 übermittelt darüber hinaus über einen Optokoppler U1 zur galvanischen Trennung dem Schaltungsblock B2, also dem zweiten elektronischen Schaltungsanordnung, Daten.

Der Transformator mit den an ihn angeschlossenen Bauteilen ist somit wie ein DC/DC-Wandler vorgesehen.

Wenn also ein Steuersignal Us am ersten Block B1 anliegt, beginnt der Schalter S1 zu takten und der DCIDC-Wandler überträgt Leistung auf die Sekundärseite. Außerdem wird vom ersten Schaltungsblock B1 gleichzeitig ein Schließen des Schalter S2, der als Entmagnetisierungsschalter wirkt, veranlasst und die Bremsspule wird somit bestromt. Daher wird dann die Bremse gelüftet und somit die Rotation der Motorwelle nicht verhindert.

Das Ausschalten der Bremsspule erfolgt in umgekehrter Reihenfolge.

Der erste Schaltungsblock 1 ist derart ausgeführt, dass er die Regelung der Ausgangsspannung unter Verwendung der durch die Stromerfassung T2 erfassten Strommesswerte ausführt, wobei das Übertragungsverhältnis ü des Transformators T1 berücksichtigt ist.

Darüber hinaus ist in einem weiteren erfindungsgemäßen Ausführungsbeispiel der erste Schaltungsblock 1 derart ausgeführt, dass er zu Beginn der Bestromung der Bremsspule die Ausgangsspannung derart regelt, dass für einen ersten Zeitabschnitt eine höhere Spannung an der Bremsspule anliegt und erst nach diesem Zeitabschnitt die für den Dauerbetrieb zulässige und/oder vorgesehene Spannung. Dazu wird das Pulsweitenmodulationsverhältnis entsprechend verändert. Außerdem wird das Start-Stop-Signal vom ersten Schaltungsblock 1 an den zweiten Schaltungsblock 2 entsprechend angepasst und somit der Schalter S2 korrekt betrieben.

Wenn die Steuerspannung abfällt, fällt somit die Versorgung des Schaltungsblockes 1 aus und der Schalter S1 wird nicht mehr getaktet. Somit kann nur noch Gleichstrom oder ein verschwindender Strom durch die Primärwicklung des Transformators T1 fließen. Daher wird die Bremsspule auch nicht mehr versorgt mit Strom. Dies bewirkt daher ein sicheres Einfallen der Bremse, also Abbremsen der Bewegung des Motors.

Die Sicherheit ist also dadurch bewirkt, dass unabhängig von der Art eines Bauteiledefektes oder vom Bauteil die Bremse angesteuert wird, wenn die Steuerspannung abgeschaltet wird. Mit dieser Sicherheit wird es sogar unmöglich gemacht, dass Energie auf die Bremsspule gelangt. Physikalisch wichtig ist dabei, dass die Bremse nach dem Ruhestromprinzip aufgebaut ist, also bei fehlendem Strom einfällt.

In einem weiteren Ausführungsbeispiel ist der erste Schaltungsblock 1 zusätzlich derart ausgeführt, dass er für einen weiten Bereich von Eingangsspannungen +Ue, -Ue dieselbe sekundärseitige Ausgangsspannung erzeugt.

In einem weiteren Ausführungsbeispiel ist der erste Schaltungsblock 1 zusätzlich derart ausgeführt, dass eine Pulsweitenmodulationsfrequenz und/oder Taktfrequenz von mehr als 4 oder gar mehr als 8 kHz eingestellt ist. Auf diese Weise ist die Magnetostriktion verringerbar und es treten weniger Geräusche auf. Bei einer vorteilhaften Wahl von 16kHz oder mehr ist sogar kein hörbares Geräusch mehr vorhanden. Dazu ist der Kondensator C1 selbstverständlich auch geeignet dimensioniert. Allerdings soll dieser Kondensator mit einer möglichst geringen Kapazität ausgestattet werden. Entsprechend hoch sollte daher die Taktfrequenz gewählt werden.

Der Schalter S2 ist nur für das Ein- und Ausschalten der Bremse zuständig.
In einem weiteren Ausführungsbeispiel ist der zweite Schaltungsblock B2 jedoch derart ausgeführt, dass er den zweiten Schalter S2 getaktet oder moduliert betreibt und somit ein zeitlicher Spannungsverlauf vorgebbar ist oder ein Strom steuerbar ist.

In einem weiteren Ausführungsbeispiel ist die Steuerspannung Us als 24 V Signal ausgeführt.

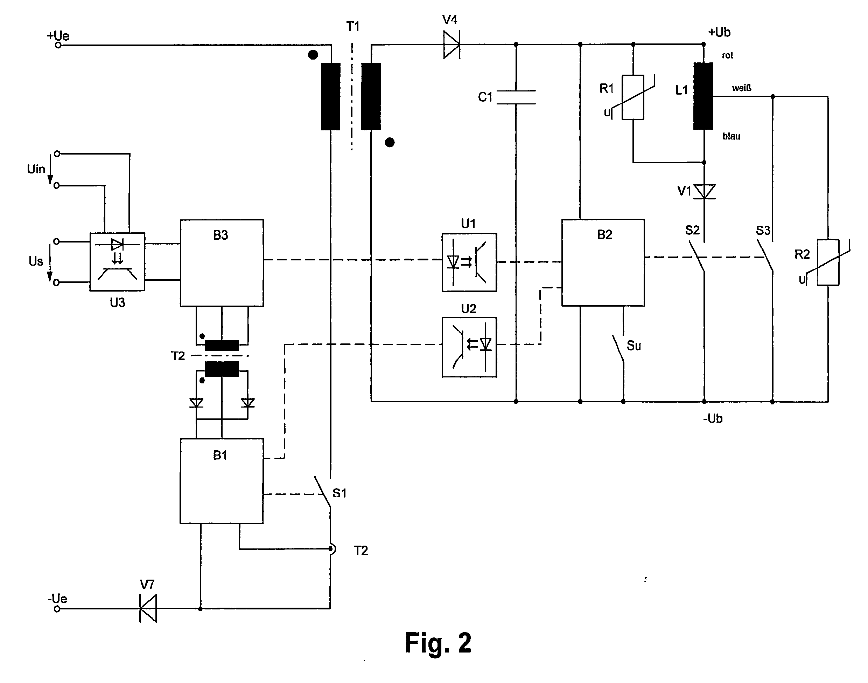

In Figur 2 ist noch ein weiteres erfindungsgemäßes Ausführungsbeispiel gezeigt. In Abänderung und Erweiterung zur Figur 1 ist die Sicherheit noch weiter erhöht:
Es ist nun ein zweiter Steuereingang Uin vorgesehen am Eingang des ersten Schaltungsblockes B1.
   Die Versorgungsspannung Uₛ wird an eine sicherheitsgerichtete 24V-Spannungsversorgung angeschlossen, also an eine 24V Spannungsversorgung die eine Sicherheit höherer Kategorie aufweist.

Der Steuereingang Uin wird von einem Ausgang eines Umrichters oder von einem SPS-Ausgang angesteuert. Nur wenn beide Uin und Us Eingänge mit 24V Pegel statt 0V haben, wird die Ansteuerung B1 mit Energie über den dritten Schaltungsblock B3 und den Transformator T2 versorgt. Der dritte Schaltungsblock B3 überträgt Signale mittels des Optokopplers U2, also einer galvanischen Trennung, an den zweiten Schaltungsblock B2 und bewirkt somit das Lüften oder Einfallen der Bremse.

Der zweite Schaltungsblock B2 überträgt Signale mittels des Optokopplers U1, also einer galvanischen Trennung, an den zweiten Schaltungsblock B1 und ermöglicht somit die sekundärseitige Spannungsregelung, weil der Schaltungsblock B1 die Taktrate entsprechend verändert in Abhängigkeit von den empfangenen Informationen über die sekundärseitig erfassten Spannungswerte der Spannung Ub.

Mittels des Schalters Su ist eine Einstellung der Bremsenspannung Ub ermöglichbar. Beispielsweise ist eine Spannung von 96V- oder von 167V- einstellbar.

Die Bremse umfasst eine Bremsspulenwicklung mit Mittelabgriff zur Ermöglichung einer Schnellerregung beim Lüften.

Das heißt, dass für einen ersten Zeitabschnitt, beispielsweise ca. 100ms, die Teilwicklung der Bremsspulenwicklung (rot - weiß) über den geschlossenen Schalter S3 mit Bremsenspannung U_{B} versorgt wird. Danach wird der Schalter S3 geöffnet und der Schalter S2 geschlossen und somit die komplette Bremsspulenwicklung (rot - blau) über S2 mit der Bremsenspannung Ub versorgt.

Die Bremsenspannung Ub wird mittels der durch die Schaltungsblöcke realisierten Regelvorrichtung auf den mit Su eingestellten Wert konstant gehalten.

Auf diese Weise ist ein schnelles Lüften der Bremse realisierbar.

## Patentansprüche

1. Elektromagnetisch betätigbare Bremse,
**dadurch gekennzeichnet, dass**
der Energiefluss der Bremse von einem Schalter derart gesteuert wird, dass bei Fehler oder Ausfall des Schalters die Bremse einfällt,
wobei ein Transformator vorgesehen ist, dessen Primärwicklung mit dem Schalter In Reihe geschaltet und aus einer Gleichspannung versorgt ist, der zur Regelung des Stromes in der Primärwicklung getaktet betrelbbar ist,
wobei die Bremsspule der Bremse aus der Sekundärwicklung des Transformators versorgt ist, Insbesondere über eine Diode
wobei die Steuerspannung für den Schalter von einem ersten Schaltungsblock B1 erzeugt ist, der aus einer Steuerspannung Us versorgt ist,
wobei der erste Schaltungsblock derart ausgeführt ist, dass zu Beginn der Bestromung der Bremsspule in einem ersten Zeitabschnitt eine höhere und danach eine niedrigere Spannung an der Bremse anliegt, insbesondere zur Erreichung eines noch schnelleren Lüftens der Bremse.

2. Elektromagnetisch betätigbare Bremse nach Anspruch 1,
**dadurch gekennzeichnet, dass**
der Fehler oder Ausfall ein dauerhaft wirksamer Kurzschluss, ein Auftrennen oder ein Hochohmigwerden des Schalters ist.

3. Elektromagnetisch betätigbare Bremse nach Anspruch 1,
**dadurch gekennzeichnet, dass**
die Steuerspannung für den Schalter von einem ersten Schaltungsblock B1 erzeugt ist, der aus einer Steuerspannung Us galvanisch getrennt versorgt ist.

4. Elektromagnetisch betätigbare Bremse nach Anspruch 1,
**dadurch gekennzeichnet, dass**
bei Ausfall der Steuerspannung Us die Bremse einfällt.

5. Vorrichtung zur sicheren Ansteuerung einer elektromagnetisch betätigbaren Bremse nach mindestens einem der Ansprüche 1 bis 4, umfassend eine Bremsspule, die bei ihrer Bestromung der Federkraft von Federelementen gegenwirkend ein Lüften der Bremse bewirkbar macht,
**dadurch gekennzeichnet, dass**
die Bremsspule galvanisch getrennt von einem sie ansteuernden ersten Schaltungsblock B1 vorgesehen ist,
wobei der erste Schaltungsblock aus der Steuerspannung Us versorgt ist.

6. Vorrichtung zur sicheren Ansteuerung einer elektromagnetisch betätigbaren Bremse nach mindestens einem der Ansprüche 1 bis 4, umfassend eine Bremsspule, die bei ihrer Bestromung der Federkraft von Federelementen gegenwirkend ein Lüften der Bremse bewirkbar macht,
**dadurch gekennzeichnet, dass**
ein Transformator vorgesehen ist, dessen Primärwicklung mit einem Schalter in Reihe geschaltet ist, der zur Regelung des Stromes in der Primärwicklung getaktet betreibbar ist,
wobei der Schalter von einem ersten Schaltungsblock steuerbar ist, der aus einer Steuerspannung versorgt ist und mit Mitteln zur Stromerfassung des Stromes auf der Primärseite verbunden ist,
wobei die Bremsspule aus der Sekundärwicklung des Transformators versorgt ist, insbesondere über eine Diode.

7. Vorrichtung nach mindestens einem der vorangegangenen Ansprüche,
**dadurch gekennzeichnet, dass**
eine galvanische Trennung ausgeführt ist zwischen Steuerspannung Us und der den vom ersten Schaltungsblock aus steuerbaren Schalter S1 versorgenden Eingangsspannung.

8. Vorrichtung nach mindestens einem der vorangegangenen Ansprüche,
**dadurch gekennzeichnet, dass**
bei Versagen eines Halbleiterbauteils ein Einfallen der Bremse ausgelöst wird.

9. Vorrichtung nach mindestens einem der vorangegangenen Ansprüche,
**dadurch gekennzeichnet, dass**
eine Freilaufdiode für die Bremsspule und ein Varistor zum Schutz gegen Überspannung vorgesehen ist.

10. Vorrichtung nach mindestens einem der vorangegangenen Ansprüche,
**dadurch gekennzeichnet, dass**
die Sekundärspannung einem Gleichrichter zugeführt wird, aus dem die Bremsspule versorgbar ist.

11. Vorrichtung nach mindestens einem der vorangegangenen Ansprüche,
**dadurch gekennzeichnet, dass**
der sekundärseitige und der primärseitige Schaltungsteil der Vorrichtung voneinander galvanisch getrennt sind.

12. Vorrichtung nach mindestens einem der vorangegangenen Ansprüche,
**dadurch gekennzeichnet, dass**
von einem zweiten Schaltungsblock mittels eines mit diesem verbundenen zweiten Schalters der Strom der Bremsspule beeinflussbar ist.

13. Vorrichtung nach mindestens einem der vorangegangenen Ansprüche,
**dadurch gekennzeichnet, dass**
der zweite Schaltungsblock zur Übertragung von Daten und/oder Steuersignalen mittels Optokoppler oder Transformator mit dem ersten Schaltungsblock verbunden ist, insbesondere zur bidirektionalen Übertragung.

14. Vorrichtung nach mindestens einem der vorangegangenen Ansprüche,
**dadurch gekennzeichnet, dass**
der zweite Schaltungsblock zur Übertragung von Daten und/oder Steuersignalen mittels Transformator mit dem ersten Schaltungsblock verbunden ist, wobei die Übertragung mittels aufmodulierten Hochfrequenzsignalen vorgesehen ist.

15. Vorrichtung nach mindestens einem der vorangegangenen Ansprüche,
**dadurch gekennzeichnet, dass**
der erste Schaltungsblock und/oder der zweite Schaltungsblock derart ausgeführt ist, dass die Vorrichtung an einem weiten Bereich von Eingangsspannungen derart betreibbar ist, dass die an der Bremsspule anliegende Spannung im Wesentlichen unverändert ist.

16. Vorrichtung nach mindestens einem der vorangegangenen Ansprüche,
**dadurch gekennzeichnet, dass**
die Zwischenkreisspannung eines Umrichters als Eingangsspannung vorgesehen ist, deren Höhe abhängt von der zur Versorgung eines vom Umrichter versorgten Elektromotors notwendigen Leistungsentnahme aus dem Zwischenkreis.

17. Vorrichtung nach mindestens einem der vorangegangenen Ansprüche,
**dadurch gekennzeichnet, dass**
der weite Bereich von Eingangsspannungen gleichgerichtete Versorgungswechselspannungen, deren Effektivwert zwischen 100V und 400 V beträgt und deren zugehörige Frequenzen von 50 bis 60 Hz betragen.

18. Vorrichtung nach mindestens einem der vorangegangenen Ansprüche,
**dadurch gekennzeichnet, dass**
der zweite Schaltungsblock derart ausgeführt ist, dass zu Beginn der Bestromung der Bremsspule in einem ersten Zeitabschnitt eine höhere und danach eine niedrigere Spannung an der Bremse anliegt, insbesondere zur Erreichung eines noch schnelleren Lüftens der Bremse.

19. Vorrichtung nach mindestens einem der vorangegangenen Ansprüche,
**dadurch gekennzeichnet, dass**
der erste Schalter S1 mit einer Frequenz von mehr als 4 kHz, insbesondere mehr als 8 oder gar 16 kHz, betrieben wird.

20. Vorrichtung nach mindestens einem der vorangegangenen Ansprüche,
**dadurch gekennzeichnet, dass**
die Steuerspannung Us erzeugt wird aus einer sicherheitsgerichteten Versorgungsspannung, insbesondere 24 Volt und einer Signaleingangsspannung.

21. Vorrichtung nach mindestens einem der vorangegangenen Ansprüche,
**dadurch gekennzeichnet, dass**
der erste Schaltungsblock eine galvanische Trennung umfasst.

22. Vorrichtung nach mindestens einem der vorangegangenen Ansprüche,
**dadurch gekennzeichnet, dass**
die Bremsspulenwicklung der Bremse einen Mittelabgriff aufweist, also aus zwei Wicklungsabschnitten zusammengesetzt ist, insbesondere zur Ermöglichung einer Schnellerregung.

23. Vorrichtung nach mindestens einem der vorangegangenen Ansprüche,
**dadurch gekennzeichnet, dass**
mittels zweier Schalter wahlweise eine der erste Wicklungsabschnitt oder die gesamte Bremsspulenwicklung bestrombar ist.

24. Vorrichtung nach mindestens einem der vorangegangenen Ansprüche,
**dadurch gekennzeichnet, dass**
beim Lüften der Bremse während eines ersten Zeitabschnittes der erste Wicklungsabschnitt bestrombar ist und danach die gesamte Bremsspulenwicklung.

25. Vorrichtung nach mindestens einem der vorangegangenen Ansprüche,
**dadurch gekennzeichnet, dass**
für den ersten Zeitabschnitt ein Wert zwischen 20 ms und 200ms vorgesehen ist.

26. Elektromotor,
**dadurch gekennzeichnet, dass**
er eine elektromagnetisch betätigbare Bremse oder eine Vorrichtung nach mindestens einem der vorangegangenen Ansprüche umfasst.

27. Elektromotor nach Anspruch 25,
**dadurch gekennzeichnet, dass**
der Schalter und/oder die Vorrichtung im Anschlusskasten des Motors vorgesehen ist.

28. Antrieb, umfassend zumindest einen Umrichter und Elektromotor nach Anspruch 25,
**dadurch gekennzeichnet, dass**
die Steuerspannung Us für den ersten Schaltungsblock B1 von einem Umrichter des Antriebs erzeugt wird.

29. Antrieb, umfassend zumindest einen Umrichter und Elektromotor nach Anspruch 25,
**dadurch gekennzeichnet, dass**
die Steuerspannung Us von einer vom Antrieb räumlich getrennt angeordneten Vorrichtung erzeugt wird.

## Claims

1. An electromagnetically actuatable brake,
**characterised in that**
the energy flow of the brake is controlled by a switch such that the brake engages in the event of an error or failure of the switch,
with a transformer being provided, the primary winding of which is connected in series with the switch and is fed by a direct current voltage, which can be operated in clocked manner for regulating the current in the primary winding,
the brake coil of the brake being fed by the secondary winding of the transformer, in particular via a diode,
the control voltage for the switch being generated by a first circuit block B 1, which is fed by a control voltage Us,
the first circuit block being designed such that at the start of supplying current to the brake coil in a first time period a higher and then a lower voltage is applied to the brake, in particular for achieving even more rapid releasing of the brake.

2. An electromagnetically actuatable brake according to Claim 1,
**characterised in that**
the error or failure is a permanently effective short-circuit, a disconnection or an increase in resistance of the switch.

3. An electromagnetically actuatable brake according to Claim 1,
**characterised in that**
the control voltage for the switch is generated by a first circuit block B1, which is fed in an electrically isolated manner by a control voltage Us.

4. An electromagnetically actuatable brake according to Claim 1,
**characterised in that**
the brake engages upon failure of the control voltage Us.

5. A device for safely activating an electromagnetically actuatable brake according to at least one of Claims 1 to 4, comprising a brake coil, which when supplied with current counteracts the spring force of spring elements, making releasing of the brake able to be brought about,
**characterised in that**
the brake coil is provided electrically isolated from a first circuit block B1 which activates it,
the first circuit block being fed by the control voltage Us.

6. A device for safely activating an electromagnetically actuatable brake according to at least one of Claims 1 to 4, comprising a brake coil, which when supplied with current counteracts the spring force of spring elements, making releasing of the brake able to be brought about,
**characterised in that**
a transformer is provided, the primary winding of which is connected in series with a switch, which can be operated in clocked manner for regulating the current in the primary winding,
the switch being able to be controlled by a first circuit block which is fed by a control voltage and is connected to means for detecting the current on the primary side,
the brake coil being fed by the secondary winding of the transformer, in particular via a diode.

7. A device according to at least one of the preceding claims,
**characterised in that**
an electrical isolation is effected between the control voltage Us and the input voltage supplying the switch S1 which can be controlled from the first circuit block.

8. A device according to at least one of the preceding claims,
**characterised in that**
engagement of the brake is triggered when a semiconductor component fails.

9. A device according to at least one of the preceding claims,
**characterised in that**
a free-wheeling diode for the brake coil and a varistor for protecting against overvoltage are provided.

10. A device according to at least one of the preceding claims,
**characterised in that**
the secondary voltage is supplied to a rectifier, from which the brake coil can be fed.

11. A device according to at least one of the preceding claims,
**characterised in that**
the secondary-side and the primary-side circuit parts of the device are electrically isolated from one another.

12. A device according to at least one of the preceding claims,
**characterised in that**
the current of the brake coil can be influenced by a second circuit block by means of a second switch connected thereto.

13. A device according to at least one of the preceding claims,
**characterised in that**
the second circuit block is connected to the first circuit block for transmission of data and/or control signals by means of an opto-coupler or transformer, in particular for bidirectional transmission.

14. A device according to at least one of the preceding claims,
**characterised in that**
the second circuit block is connected to the first circuit block for transmission of data and/or control signals by means of a transformer, the transmission being provided by means of modulated-on high-frequency signals.

15. A device according to at least one of the preceding claims,
**characterised in that**
the first circuit block and/or the second circuit block is designed such that the device can be operated using a wide range of input voltages such that the voltage applied to the brake coil is substantially unchanged.

16. A device according to at least one of the preceding claims,
**characterised in that**
the intermediate-circuit voltage of a converter is provided as input voltage, the level of which depends on the power taken from the intermediate circuit which is necessary for supplying an electric motor supplied by the converter.

17. A device according to at least one of the preceding claims,
**characterised in that**
the broad range of input voltages rectified supply alternating voltages, the rms value of which is between 100 V and 400 V and the associated frequencies of which are from 50 to 60 Hz [sic].

18. A device according to at least one of the preceding claims,
**characterised in that**
the second circuit block is designed such that at the start of supplying current to the brake coil in a first time period a higher and then a lower voltage is applied to the brake, in particular for achieving even more rapid releasing of the brake.

19. A device according to at least one of the preceding claims,
**characterised in that**
the first switch S1 is operated with a frequency of more than 4 kHz, in particular more than 8 or even 16 kHz.

20. A device according to at least one of the preceding claims,
**characterised in that**
the control voltage Us is generated from a safety-related supply voltage, in particular 24 volt, and a signal input voltage.

21. A device according to at least one of the preceding claims,
**characterised in that**
the first circuit block comprises an electrical isolation.

22. A device according to at least one of the preceding claims,
**characterised in that**
the brake coil winding of the brake has a centre tap, i.e. is composed of two winding sections, in particular for permitting high-speed excitation.

23. A device according to at least one of the preceding claims,
**characterised in that**
current can flow either through the first winding section or through the entire brake-coil winding by means of two switches.

24. A device according to at least one of the preceding claims,
**characterised in that**
upon releasing the brake during a first time period current can flow through the first winding section, and then the entire brake-coil winding.

25. A device according to at least one of the preceding claims,
**characterised in that**
a value of between 20 ms and 200 ms is provided for the first time period.

26. An electric motor,
**characterised in that**
it comprises an electromagnetically actuatable brake or a device according to at least one of the preceding claims.

27. An electric motor according to Claim 25 [sic],
**characterised in that**
the switch and/or the device is provided in the terminal box of the motor.

28. A drive, comprising at least a converter and an electric motor according to Claim 25 [sic],
**characterised in that**
the control voltage Us for the first circuit block B1 is generated by a converter of the drive.

29. A drive, comprising at least a converter and an electric motor according to Claim 25 [sic],
**characterised in that**
the control voltage Us is produced by a device arranged spatially separately from the drive.

## Revendications

1. Frein à commande électromagnétique,
**caractérisé en ce**
**que** le flux d'énergie du frein est commandé par un commutateur de façon qu'en cas de défaut ou de défaillance du commutateur, le frein se ferme,
un transformateur étant prévu dont l'enroulement primaire est monté en série avec le commutateur et alimenté à partir d'une tension continue, que l'on peut faire fonctionner de manière cadencée pour régler le courant dans l'enroulement primaire,
la bobine de frein du frein étant alimentée à partir de l'enroulement secondaire du transformateur, en particulier via une diode,
la tension de commande pour le commutateur étant générée par un premier bloc de circuit B1 qui est alimenté à partir d'une tension de commande Us,
le premier bloc de circuit étant réalisé de façon qu'au début de l'alimentation de la bobine de frein, dans un premier intervalle de temps, une tension plus élevée et ensuite plus basse est appliquée au frein, en particulier pour atteindre une ouverture encore plus rapide du frein.

2. Frein à commande électromagnétique selon la revendication 1,
**caractérisé en ce**
**que** le défaut ou la défaillance est un court-circuit actif de façon permanente, une coupure ou un passage à haute impédance du commutateur.

3. Frein à commande électromagnétique selon la revendication 1,
**caractérisé en ce**
**que** la tension de commande pour le commutateur est générée par un premier bloc de circuit B1 qui est alimenté à partir d'une tension de commande Us de manière séparée galvaniquement.

4. Frein à commande électromagnétique selon la revendication 1,
**caractérisé en ce**
**que** le frein se ferme en cas de défaillance de la tension de commande Us.

5. Dispositif pour la commande sûre d'un frein à commande électromagnétique selon au moins l'une des revendications 1 à 4, comprenant une bobine de frein qui, lorsqu'elle est alimentée, provoque une ouverture du frein en s'opposant à la force élastique d'éléments à ressert,
**caractérisé en ce**
**que** la bobine de frein est prévue avec séparation galvanique d'un premier bloc de circuit B1 qui la commande,
le premier bloc de circuit étant alimenté à partir de la tension de commande Us.

6. Dispositif pour la commande sûre d'un frein à commande électromagnétique selon au moins l'une des revendications 1 à 4, comprenant une bobine de frein qui, lorsqu'elle est alimentée, provoque une ouverture du frein en s'opposant à la force élastique d'éléments à ressort,
**caractérisé en ce**
**qu'**un transformateur est prévu, dont l'enroulement primaire est monté en série avec un commutateur que l'on peut faire fonctionner de manière cadencée pour régler le courant dans l'enroulement primaire,
le commutateur pouvant être commandé par un premier bloc de circuit qui est alimenté à partir d'une tension de commande et étant relié à des moyens de détection du courant du côté primaire,
la bobine de frein étant alimentée à partir de l'enroulement secondaire du transformateur, en particulier via une diode.

7. Dispositif selon au moins l'une des revendications précédentes,
**caractérisé en ce**
**qu'**une séparation galvanique est réalisée entre la tension de commande Us et la tension d'entrée qui alimente le commutateur S1 pouvant être commandé par le premier bloc de circuit.

8. Dispositif selon au moins l'une des revendications précédentes,
**caractérisé en ce**
**qu'**une fermeture du frein est déclenchée en cas de défaillance d'un composant à semiconducteurs.

9. Dispositif selon au moins l'une des revendications précédentes,
**caractérisé en ce**
**qu'**il est prévu une diode de roue libre pour la bobine de frein et une varistance pour la protection contre la surtension.

10. Dispositif selon au moins l'une des revendications précédentes,
**caractérisé en ce**
**que** la tension secondaire est amenée à un redresseur à partir duquel la bobine de frein peut être alimentée.

11. Dispositif selon au moins l'une des revendications précédentes,
**caractérisé en ce**
**que** les parties de circuit côté secondaire et côté primaire du dispositif sont séparées galvaniquement l'une de l'autre.

12. Dispositif selon au moins l'une des revendications précédentes,
**caractérisé en ce**
**que** le courant de la bobine de frein peut être influencé par un deuxième bloc de circuit au moyen d'un deuxième commutateur relié à celui-ci.

13. Dispositif selon au moins l'une des revendications précédentes,
**caractérisé en ce**
**que** le deuxième bloc de circuit est relié au premier bloc de circuit par l'intermédiaire d'un optocoupleur ou d'un transformateur pour la transmission de données et/ou de signaux de commande, en particulier pour la transmission bidirectionnelle.

14. Dispositif selon au moins l'une des revendications précédentes,
**caractérisé en ce**
**que** le deuxième bloc de circuit est relié au premier bloc de circuit par l'intermédiaire d'un transformateur pour la transmission de données et/ou de signaux de commande, la transmission étant prévue au moyen de signaux à haute fréquence modulés.

15. Dispositif selon au moins l'une des revendications précédentes,
**caractérisé en ce**
**que** le premier bloc de circuit et/ou le deuxième bloc de circuit sont réalisés de façon que le dispositif puisse fonctionner sur une large plage de tensions d'entrée de telle sorte que la tension appliquée à la bobine de frein soit essentiellement inchangée.

16. Dispositif selon au moins l'une des revendications précédentes,
**caractérisé en ce**
**qu'**il est prévu comme tension d'entrée la tension de circuit intermédiaire d'un convertisseur de fréquence, dont la valeur dépend de l'absorption de puissance à partir du circuit intermédiaire qui est nécessaire pour l'alimentation d'un moteur électrique alimenté par le convertisseur de fréquence.

17. Dispositif selon au moins l'une des revendications précédentes,
**caractérisé en ce**
**que** la large plage de tensions d'entrée comprend des tensions alternatives d'alimentation redressées dont la valeur efficace est comprise entre 100 V et 400 V et dont les fréquences associées sont comprises entre 50 et 60 Hz.

18. Dispositif selon au moins l'une des revendications précédentes,
**caractérisé en ce**
**que** le deuxième bloc de circuit est réalisé de façon qu'au début de l'alimentation de la bobine de frein, dans un premier intervalle de temps, une tension plus élevée et ensuite plus basse est appliquée au frein, en particulier pour atteindre une ouverture encore plus rapide du frein.

19. Dispositif selon au moins l'une des revendications précédentes,
**caractérisé en ce**
**que** le premier commutateur S1 fonctionne à une fréquence supérieure à 4 kHz, en particulier supérieure à 8 ou même 16 kHz.

20. Dispositif selon au moins l'une des revendications précédentes,
**caractérisé en ce**
**que** la tension de commande Us est générée à partir d'une tension d'alimentation sécurisée, en particulier 24 volts, et d'une tension d'entrée de signalisation.

21. Dispositif selon au moins l'une des revendications précédentes,
**caractérisé en ce**
**que** le premier bloc de circuit comprend une séparation galvanique.

22. Dispositif selon au moins l'une des revendications précédentes,
**caractérisé en ce**
**que** l'enroulement de bobine de frein du frein présente un point milieu, donc est composé de deux sections d'enroulement, en particulier pour permettre une excitation rapide.

23. Dispositif selon au moins l'une des revendications précédentes,
**caractérisé en ce**
**qu'**au moyen de deux commutateurs, il est possible d'alimenter au choix la première section d'enroulement ou l'enroulement de bobine de frein complet.

24. Dispositif selon au moins l'une des revendications précédentes,
**caractérisé en ce**
**que** lors de l'ouverture du frein, pendant un premier intervalle de temps, la première section d'enroulement peut être alimentée et ensuite l'enroulement de bobine de frein complet.

25. Dispositif selon au moins l'une des revendications précédentes,
**caractérisé en ce**
**que** pour le premier intervalle de temps, il est prévu une valeur comprise entre 20 ms et 200 ms.

26. Moteur électrique,
**caractérisé en ce**
**qu'**il comprend un frein à commande électromagnétique ou un dispositif selon au moins l'une des revendications précédentes.

27. Moteur électrique selon la revendication 26,
**caractérisé en ce**
**que** le commutateur et/ou le dispositif est prévu dans le boîtier de raccordement du moteur.

28. Entraînement, comprenant au moins un convertisseur de fréquence et un moteur électrique selon la revendication 26,
**caractérisé en ce**
**que** la tension de commande Us pour le premier bloc de circuit B1 est générée par un convertisseur de fréquence de l'entraînement.

29. Entraînement, comprenant au moins un convertisseur de fréquence et un moteur électrique selon la revendication 26,
**caractérisé en ce**
**que** la tension de commande Us est générée par un dispositif séparé spatialement de l'entraînement.
